# EUROPEAN PATENT APPLICATION

(11) **EP 3 048 572 A1**
(43) Date of publication of application: **27.07.2016**
(21) Application number: 16152586.0
(22) Date of filing: 25.01.2016
(51) Int. Cl.: G06Q 30/00

(54) **SYSTEM FOR MANAGING WEB-BASED REAL-TIME AUDIOVISUAL SERVICE TRANSACTION**

(30) Priority: 26.01.2015 TW 104102436
(71) Applicant: Wong, Gean Cheon, Taichung City 413 (TW)
(72) Inventor: Wong, Gean Cheon, Taichung City 413 (TW)
(74) Representative: Kuhnen & Wacker

(57) **Abstract**

A system for managing Web-based real-time audiovisual service transactions is provided. The system is available to a remote supplier and a remote client through a network connection. The system includes a master module 11, a supplier module 21, a client module 31 and a data transfer platform 41. The master module 11 bridges the expectation gap between the remote supplier and the remote client. The supplier module 21 and the client module 31 use a human face and/or a voiceprint to discern the identities of the remote supplier and the remote client. The master module 11 sniffs a service process to exercise direct control over transaction content quality.

## Description

### Field of the Invention

The present invention relates to Web-based transaction systems and, more particularly, to a highly efficient and least-disputed system for managing Web-based real-time audiovisual service transactions.

### Background of the Invention

Web-based transactions are all the rage. Bidding Websites which are readily available to buyers and sellers at low transaction costs sell all sorts of things, whether credible or incredible, thereby allowing a wide variety of goods to circulate worldwide quickly and at low transaction costs. The aforesaid Web-based transactions, also known as person-to-person or consumer-to-consumer (C2C) transactions, make good use of goods, but are restricted to tangible goods. As a result, there is difficulty in conducting service-related transactions, such as those pertaining to images, voice, pictures, translations, demonstrations, instruction, communication and descriptions, on existing C2C sites.

Existing transactions which involve providing real-time audiovisual graphical and text-based service online are restricted to business-to-consumer (B2C) marketing. For example, law firms give legal advice online, whereas cram schools and tutoring centers teach privately online, because their services are intangible. B2C transactions are especially suitable for intellectual property-related services, because intellectual property-related services require related professionals to examine suppliers' competence and supervise supply quality. When delivered in the C2C business model, the aforesaid services end up with disputes inevitably. For example, after placing an order for online interpretation service, a client is dissatisfied with the interpreter's interpretation skills, but the supplier claims that the client is to blame on the grounds of the client's strong accent and unclear articulation. By contrast, if the transaction of online interpretation service is paid for after the transaction is done, the client will be unlikely to make the payment, and in consequence the unrewarded supplier will complain about the default. Likewise, third-party payment, which features delayed payment, is ineffective in distinguishing the victim from the wrongdoer and determining how to pay a price. Conventional systems for managing transaction service which relies upon long-distance audiovisual communication cannot confirm the identities of the parties to a transaction, thereby posing risks to the quality and security of the transaction service. For example, systems for managing taxi call service fail to ensure passenger safety for the reason as follows: although drivers must submit security-related supporting documents, such as their driver licenses, certificates of no criminal conviction, and traffic violations clearance certificates, in order to apply for account registration, those registered drivers who are selected by the systems to provide the taxi call service are not necessarily the ones who eventually provide the taxi call service.

As mentioned before, if conducted online in accordance with the C2C business model, conventional transactions of services pertaining to images, voice, pictures and essay writing will be difficult to manage in terms of quality control and thus predisposed to plenty of problems; hence, it is necessary to provide a novel system for managing information to improve the prior art.

### Summary of the Invention

It is an objective of the present invention to provide a system for managing Web-based real-time audiovisual service transactions so that the system enables a buyer and a seller to receive and offer real-time audiovisual service, respectively, online in a highly efficient and least-disputed manner. The audiovisual service content accounts for the transaction process in whole or in part.

In order to achieve the above and other objectives, the present invention provides a system for managing Web-based real-time audiovisual service transactions, with the system being available to a remote supplier and a remote client through a network connection, the system comprising a master module, a supplier module, a client module and a data transfer platform, characterized by:
the master module connecting with the supplier module, the client module and the data transfer platform and having a user database;
the supplier module for receiving from the remote supplier supplier information comprising a service content and a biometric identification data adapted to identify a supplier and sending the supplier information to the user database of the master module, and
the client module for receiving client information from the remote client and sending the client information to the user database of the master module, with the client information comprising a demand content, wherein the master module performs a logical comparison between the demand content and all the service contents stored in the user database to find the remote suppliers who are considered eligible in accordance with the demand content and then send the supplier information of all the eligible remote suppliers to the client module in real time.

After the remote client has chosen a specific remote supplier through the client module, the master module sends a transaction message to the specific remote supplier through the supplier module. Afterward, the specific remote supplier provides real-time audiovisual service to the client module through the supplier module and the data transfer platform, thereby allowing the remote client to access the real-time audiovisual service through a network.

Furthermore, the master module further provides a posterior arbitration mechanism including a sniffing unit disposed in the master module to sniff all or part of the real-time audiovisual service content through the data transfer platform if the remote supplier and the remote client give prior consent to sniff the real-time audiovisual service content, thereby collecting evidence for use in arbitration about service quality or service fees.

Furthermore, the service content of the supplier information comprises serviceable specialty and grade, service hours, client eligibility criteria, charge rates, personal profile, an answer to question whether to defer to arbitration for determining a fee change when a total of transaction fees reaches a specified amount and the client is dissatisfied with the service, data conducive to the service, and data conducive to a search for clients who are waiting for service voluntarily and openly, wherein the demand content of the client information comprises demand items, required specialty and grade, an intended duration of service, supplier eligibility criteria, intended prices, data conducive to a search for eligible suppliers, and data required for the client's waiting for service voluntarily and openly.

Preferably, the master module further connects with a receipt and payment system, calculates the total fee of the real-time audiovisual service according to charge rates set forth in the service content of the specific remote supplier, and informs the receipt and payment system of the calculated total fee, wherein the receipt and payment system receives a payment made by the remote client according to the calculated total fee, deducts a service fee from the payment amount, and pays the remainder to the specific remote supplier.

Preferably, the service content of the supplier information further comprises an initial duration of free service.

The client information further comprises a biometric identification data for identifying a client. Preferably, the biometric identification data of the client information and the supplier information includes a human facial image and/or a voice sample. The client module and/or supplier module capture a human facial image and/or a voice sample of a login-authenticated person through a video module and/or a conversation module of a mobile communication device. The master module compares the human facial image and/or the voice sample of the remote client and remote supplier with the human facial images and/or voice samples stored in the user database to generate a verification result and sends the verification result to the client module and/or the supplier module.

Furthermore, upon completion of the real-time audiovisual service, the remote client and the remote supplier give each other a transaction rating through a rating mechanism. The transaction ratings are sent through the client module and the supplier module to the user database of the master module, stored therein, and statistically computed by the master module to form at least a single transaction rating, an accumulative rating of all transactions and a weighted average rating calculated in accordance with a charged service duration which are automatically included in the supplier information and the client information.

The aforesaid objectives and advantages of the present invention are described hereunder and illustrated with embodiments with reference to the accompanying drawings to allow persons skilled in the art to gain insight into the present invention.

### Brief Description of the Drawings

FIG. 1 is a schematic view of the framework of a system of the present invention;
FIG. 2 is a flowchart of the process flow of verifying two parties to a transaction according to the present invention; and
FIG. 3 is a flowchart of the process flow of operation of the system according to the present invention.

### Detailed Description of the Invention

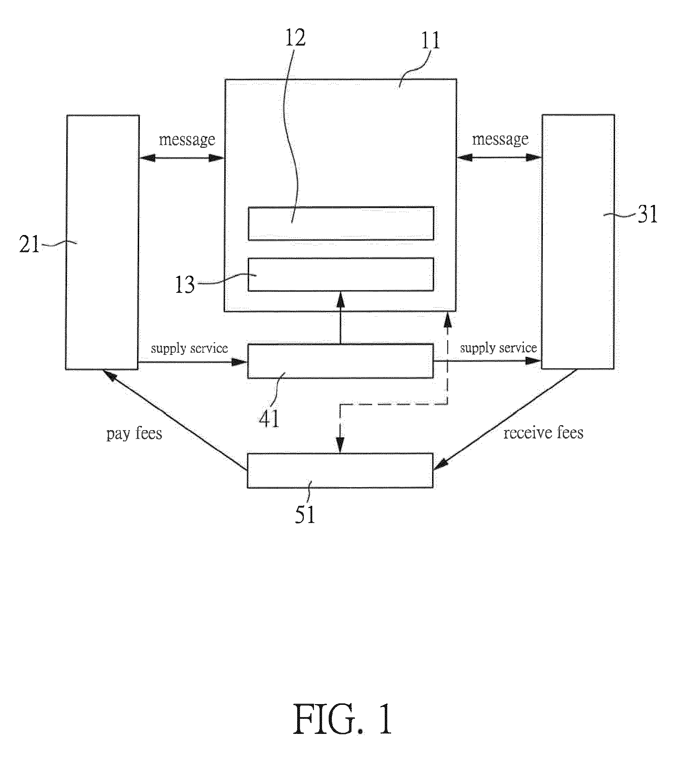

The present invention provides a system for managing Web-based real-time audiovisual service transactions so that the system is available to remote suppliers and remote clients through a network connection. Referring to FIG. 1, the system for managing Web-based real-time audiovisual service transactions is a network server host which is located at a remote end and comprises a master module 11, a supplier module 21, a client module 31 and a data transfer platform 41.

The master module 11 connects with the supplier module 21, the client module 31 and the data transfer platform 41. The master module 11 has a user database 12.

The supplier module 21 receives supplier information from remote suppliers. The supplier information comprises a service content and a biometric identification data for identifying a supplier. In this embodiment, the biometric identification data is a human facial image and/or a voice sample. Alternatively, the biometric identification data includes fingerprint-based biometric data, iris-based biometric data, and the like. The service content of the supplier information comprises serviceable specialty and grade, service hours, client eligibility criteria, charge rates, personal profile, the answer to the question whether to defer to arbitration for determining a fee change when the total of transaction fees reaches a specified amount and the client is dissatisfied with the service, data conducive to the service, data conducive to a search for clients who are waiting for service voluntarily and openly, and an initial duration of free service. The supplier information is stored in the user database 12 of the master module 11.

The client module 31 receives client information from remote clients. The client information comprises a demand content. In this embodiment, the client information further comprises a biometric identification data for identifying a client. The biometric identification data is a human facial image and/or a voice sample. Alternatively, the biometric identification data includes fingerprint-based biometric data, iris-based biometric data, and the like. The client information is stored in the user database 12 of the master module 11. The demand content of the client information comprises demand items, required specialty and grade, an intended duration of service, supplier eligibility criteria, intended prices, data conducive to a search for eligible suppliers, and data required for the client's waiting for service voluntarily and openly. The master module 11 performs a logical comparison between the demand content and all the service contents stored in the user database 12 to find the remote suppliers who are considered eligible in accordance with the demand content and then send the supplier information of all the eligible remote suppliers to the client module 31 in real time.

After the remote client has chosen a specific remote supplier through the client module 31, the master module 11 sends a transaction message to the specific remote supplier through the supplier module 21. Then, the specific remote supplier provides real-time audiovisual service to the client module 31 through the supplier module 21 and the data transfer platform 41, thereby allowing the remote client to access the real-time audiovisual service through a network. The real-time audiovisual service content accounts for the transaction process in whole or in part.

To prevent disputes which might otherwise arise from the expectation gap in service quality and a service fee between the two parties to the transaction, namely the remote client and the specific remote supplier, the master module 11 further provides a posterior arbitration mechanism. The posterior arbitration mechanism is effectuated by a sniffing unit 13 disposed in the master module 11. If the two parties to the transaction give prior consent to permit the system to sniff the content of a transaction and abide by an arbitration clause in the event of a dispute, whatever data sniffed by the system will be regarded as solid evidence when the dispute happens; however, if intellectual property right and privacy is involved, either party to the transaction can withdraw the prior consent about sniffing. If the remote supplier and the remote client give prior consent to permit the system to sniff real-time audiovisual service content, the sniffing unit 13 will sniff all or part of the real-time audiovisual service content through the data transfer platform 41 to collect evidence for use in arbitration about service quality or service fees.

The master module 11 further connects with a receipt and payment system 51. The master module 11 calculates the total fee of the real-time audiovisual service according to charge rates set forth in the service content of the specific remote supplier and then informs the receipt and payment system 51 of the calculated total fee. Afterward, the receipt and payment system 51 receives a payment made by the remote client according to the calculated total fee. After receiving the payment made by the remote client according to the calculated total fee, the receipt and payment system 51 deducts a service fee from the payment amount and then pays the remainder to the specific remote supplier.

The system for managing Web-based real-time audiovisual service transactions according to the present invention enables a user to get connected to the system with a mobile communication device (such as a smartphone) through the Internet (including a conventional network or wireless connection to the Internet, such as WIFI, 3G, 4G and the like). After the master module 11 has matched the remote client and the remote supplier in accordance with their respective eligibility criteria and the remote client has promised to make payment in a long-distance manner, the remote supplier begins providing service to the remote client online and audiovisually. Upon completion of the service, the receipt and payment system 51, which is connected to the master module 11, deducts a service fee from the payment made by the remote client and then pays the remainder to the remote supplier, thereby finalizing the transaction.

Upon completion of the real-time audiovisual service, the remote client and the remote supplier give each other a transaction rating through a rating mechanism. The transaction ratings are sent, through the client module 31 and the supplier module 21, to the user database 12 of the master module 11 and stored therein. The transaction ratings are statistically computed by the master module 11 to form at least a single transaction rating, an accumulative rating of all transactions and a weighted average rating calculated in accordance with a charged service duration which are automatically included in the supplier information and the client information. The above-mentioned is further illustrated with examples below.

For example, a supplier provides three types of services, namely free Chinese to Japanese translation service provided in the first three minutes, free Chinese to Japanese translation service provided in the first ten minutes, and free Excel instruction service provided in the first ten minutes. The supplier provides the aforesaid services to Putonghua-speaking clients with Beijing accent and Japanese-speaking clients with Kyoto accent. The system gives the supplier at least 18 ratings, including three ratings given to the Chinese clients receiving the aforesaid three types of services, respectively, three ratings given to the Japanese clients receiving the aforesaid three types of services, respectively, a rating given to the Chinese clients receiving free translation service during the first three minutes, a rating given to the Japanese clients receiving free translation service during the first three minutes, a rating given to the Chinese clients receiving free translation service during the first ten minutes, a rating given to the Japanese clients receiving free translation service during the first ten minutes, a rating given to the Chinese clients receiving language service, a rating given to the Japanese clients receiving language service, a rating given to the Chinese clients receiving Excel instruction service , a rating given to the Japanese clients receiving Excel instruction service, a rating given to the total case count, and a rating given to a weighted average rating calculated in accordance with a charged service duration.

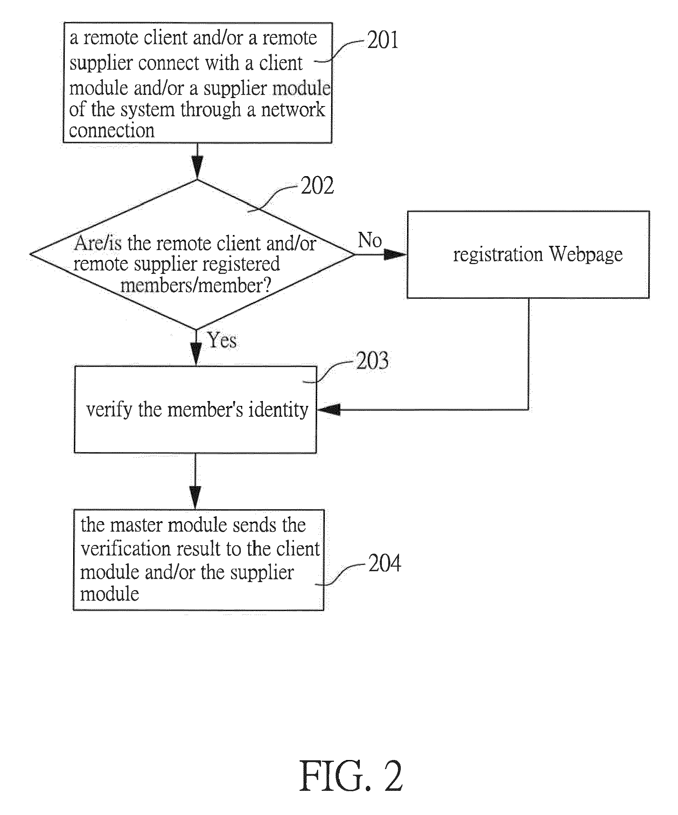

Since the system aims to manage Web-based services pertaining to voice or images, it is feasible for both the client module 31 and the supplier module 21 to have recognition options for entering data related to a voice and/or a human face, so as to verify the identities of the two parties to a transaction, ensure that each account number is owned by one and only one user, stabilize service quality, and enhance the reliability of the rating mechanism. By contrast, each account number registered with a conventional C2C site can be owned by multiple users, used temporarily by any user who does not own the account number, used permanently by any user who does not own the account number, or used by unauthorized persons, thereby reducing rating credibility. Referring to FIG. 2, the verification of identities of the two parties to a transaction takes the steps as follows:
201: a remote client or a remote supplier connect with a client module and/or a supplier module of the system through a network connection;
202: determine whether the remote client and/or remote supplier are/is registered members/member and exit a member registration Webpage when the determination is negative;
203: verify the member's identity, wherein the client module or supplier module capture a human facial image and/or a voice sample of a login-authenticated person through a video module and/or a conversation module of a mobile communication device, wherein the human facial image and/or voice sample of the login-authenticated person is compared with human facial images and/or voice samples stored in a user database through the master module, wherein the master module compares the member's identity, such as the member's human facial image or voice sample, with the identity of an actual party to a transaction during the transaction process to assess their degree of similarity, so as to generate a verification result; and
204: send the verification result to the client module and/or supplier module and send, when the degree of similarity is less than a predetermined value, a warning message, by the master module.

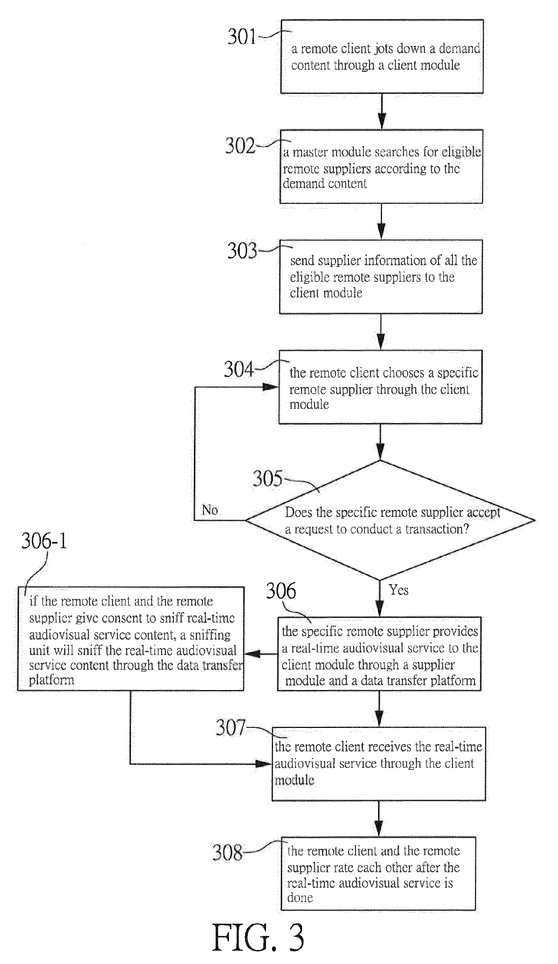

Referring to FIG. 3, the operation of the system for managing Web-based real-time audiovisual service transactions according to the present invention takes the steps as follows:
301: a remote client connected to the system jots down a demand content through a client module;
302: a master module searches for eligible remote suppliers according to the demand content and by keywords;
303: the master module sends supplier information of all the eligible remote suppliers to the client module;
304: the remote client chooses a specific remote supplier through the client module;
305: the master module sends a transaction message to the specific remote supplier through the supplier module to request the specific remote supplier to conduct a transaction, wherein the transaction message comprises the client information of the remote client;
306: the specific remote supplier accepts the request to conduct the transaction and thus provides real-time audiovisual service to the client module through the supplier module and a data transfer platform;
306-1: if both the remote client and the remote supplier give consent to sniff real-time audiovisual service content, a sniffing unit will sniff all or part of the real-time audiovisual service content through the data transfer platform;
307: the remote client receives the real-time audiovisual service through the client module; and
308: the remote client and the remote supplier rate each other and thus finalize the transaction after the real-time audiovisual service is done.

Simulated Service Case 1, real-time interpretation service: A arrived at a port of entry of a foreign country but failed to give a good answer to a question raised by a customs officer about a suspicious item contained in the luggage carried by A, and thus A needed interpretation service immediately with a view to understanding the related laws of the foreign country. A accessed the system to thereby find a hundred of interpretation service suppliers who comprehend their native language and the foreign country's language, find three professionals specialized in the suspicious item, and find a person who accepts the offered price. After selecting and clicking on the "accept transaction" option, A enabled the selected supplier to provide real-time interpretation service to A and the customs officer through A's cellular phone.

Simulated Service Case 2, real-time car troubleshooting instruction service: driving on a highway on a holiday, B suddenly discovered that the brake indicator on the dashboard is abnormally on. Although the car is still moving and the brake is still functioning, B pulled the car off the road for fear that a traffic accident might otherwise happen; meanwhile, B wondered whether to call a towing service provider or seek car troubleshooting advice from a professional, but such a professional was unfortunately unavailable. B accessed the system to search for vehicle repair suppliers, found supplier C, selected a transaction, and explained to supplier C what was going on at the scene. On the phone, C asked B to turn on the video camera and take pictures of the engine bay. After studying the pictures taken of the engine bay, C gave B the advice as follows: the brake indicator was designed to turn on as soon as the brake oil level fell below a standard level; in fact, the engine bay still hold enough brake oil, and the car is still able to brake; hence, the problem arose from a transmission line; it was advisable for B to drive slowly and take the car to a nearby mechanic for an overhaul. Therefore, the system enables real-time instruction to be delivered by a professional online and thus dispenses with a time-consuming complicated towing process. With this model, real-time assistance is provided to any person who needs urgent special consultation.

Simulated Service Case 3, language teaching: D, a Briton of Japanese descent, teaches English to Japanese people through the system. D teaches so well that she is highly rated, and in consequence her students outnumber her by a large margin; hence, D asks E, a friend of hers, to deliver English lessons to new students on her behalf. An evaluation mechanism of the system discovered, during the class taught by E, that E's voiceprint did not belong to the login account of a party to the transaction. In view of this, the system sent a warning to E in real time and brought the transaction to a halt; and the system told D that D would be disqualified if D failed to give a reasonable explanation before a deadline.

Simulated Service Case 4, professional technical instruction service: a production line of company F broke down and thus was inspected by local manufacturers; despite the inspections, the cause of the breakdown remained unidentified. With the system, F found G who was a foreign technician familiar with the production line. F and G concurred on the following: video-based instruction is charged 10 USD per minute; the first 30 minutes' instruction is delivered free of charge; the system sniffs the whole instruction process; and the arbitration clause on fees charged for unsatisfactory service is applicable. In the course of the first 30 minutes' instruction service provided free of charge, F was impressed by G's expertise and thus F agreed to pay for the transaction by credit card. Afterward, G delivered instruction to F for four hours to thereby troubleshoot the breakdown of the production line, and thus F and G agreed to terminate the service and fee accumulation. Hence, F had the production line repaired for just 2,400 USD and in four hours, that is, in a way cheaper and faster than hiring a foreign technician to perform on-site inspection and repair. Afterward, F discovered that G had spent one hour performing irrelevant inspection during the instruction process in an attempt to prolong the instruction process; hence, F requested G to refund a hour's fee. But G insisted that the inspection is necessary. As a result, F and G requested an impartial third party to rule on the dispute pursuant to the arbitration clause.

Simulated Service Case 5, car rental management service: H is an online car rental transaction management company which, when recruiting member drivers, requires the recruits to submit their driver licenses and certificates of no criminal conviction before being allowed to sign up with H, so as to ensure passenger safety. In practice, when contacting the drivers to assign service tasks to them, H cannot confirm whether the respondents are the ones who log into the accounts; as a result, the security check which entails examining supporting documents is useless. Hence, H requires the recruits to leave their image or voice sample files to the system when signing up with H. During the first one minute's conversation conducted between a driver who is assigned the service task and a passenger through the transfer platform of the system, the system determines whether the driver's voiceprint matches a voice sample left by any driver who signed up with H, so as to verify the driver's identity and thus ensure the quality of service security.

Therefore, the quality of the system for managing Web-based real-time audiovisual service transactions according to the present invention depends on a supplier's working skills. In view of this, suppliers disclose their working skills and charge rates to clients, thereby speeding up a bargaining process. The suppliers set the number of minutes during which the suppliers provide free service first, and thus the clients have the opportunity to get a free trial and undertake communication, thereby precluding unnecessary transaction. Upon completion of the transaction, the supplier and the client rate each other. During the transaction process, a dissatisfied party to the transaction may terminate the transaction unilaterally at any time to stop the otherwise ongoing charging process. Consent given to the termination of a transaction contributes to a rating record. The rating record varies, depending on whether the consent is given Unilateral or bilateral. The rating record is one of the criteria against which the parties to a transaction are evaluated and selected.

Since the subject matters of transactions managed by the system for managing Web-based real-time audiovisual service transactions according to the present invention mostly involve providing services through voice or images, both the client module 31 and the supplier module 21 have a recognition option for entering data pertaining to a voice or human face to thereby verify the identities of the two parties to a transaction, ensure that each account number is owned by one and only one user, stabilize service quality, and enhance the reliability of the rating mechanism. Confirming the supplier's identity with a human face or voiceprint, coupled with sniffing a service process with the sniffing unit 13 of the master module 11, is effective in exercising direct control over the quality of transaction content and setting the initial duration of free service such that intangible audiovisual service can be rendered tangible, transacted reasonably, subjected to fee arbitration to thereby settle fee-related disputes fairly after the transaction is done, and equipped with a sophisticated rating mechanism whereby a supplier and a client evaluate each other in terms of eligibility, so as to enable various intelligent persons to get a job at any time any place, enable various intelligent clients to receive real-time services at low costs, and enable human intelligence to circulate quickly, thereby improving the world.

The present invention enables audiovisual graphical and text-based service providers from around the world to enter supply-related data and related data to the system to thereby form a large supply database. The audiovisual service content accounts for the transaction process in whole or in part. The clients access the system and select from numerous suppliers the ones eligible in terms of demand and related criteria so as to conduct transactions. Furthermore, when transferred by the Internet, subject matters of transactions can be displayed instantly or applied in real time, not to mention that the long-distance receipt and payment system 51 enables the clients to pay payment conveniently and enables the suppliers to receive payment reliably. During the process, the system makes good use of features of computers, such as easy input and quick comparison, to record the features of the parties to a transaction and the service content for use in identification and examination, so as to effectuate efficient quality control. By contrast, conventional C2C transaction model is ineffective in managing the quality of goods directly and thus gives rise to disputes.

## Claims

1. A system for managing Web-based real-time audiovisual service transactions, with the system being available to a remote supplier and a remote client through a network connection, the system comprising a master module (11), a supplier module (21), a client module (31) and a data transfer platform (41), **characterized by**:
the master module (11) connecting with the supplier module (21), the client module (31) and the data transfer platform (41) and having a user database (12);
the supplier module (21) for receiving from the remote supplier supplier information comprising a service content and a biometric identification data adapted to identify a supplier and sending the supplier information to the user database (12) of the master module (11), wherein the remote supplier provides a real-time audiovisual service to the data transfer platform (41) through the supplier module (21); and
the client module (31) for receiving client information from the remote client and the real-time audiovisual service from the data transfer platform (41) and sending the client information to the user database (12) of the master module (11), with the client information comprising a demand content, wherein the master module (11) performs a logical comparison between the demand content and all the service contents stored in the user database (12) to find the remote suppliers who are considered eligible in accordance with the demand content and then send the supplier information of all the eligible remote suppliers to the client module (31) in real time.

2. The system of claim 1, **characterized in that** the master module (11) further provides a posterior arbitration mechanism including a sniffing unit (13) disposed in the master module (11) to sniff at least a portion of the real-time audiovisual service content through the data transfer platform (41), thereby collecting evidence for use in arbitration about one of service quality and service fees.

3. The system of claim 1, **characterized in that** the service content of the supplier information comprises serviceable specialty and grade, service hours, client eligibility criteria, charge rates, personal profile, an answer to question whether to defer to arbitration for determining a fee change when a total of transaction fees reaches a specified amount and the client is dissatisfied with the service, data conducive to the service, and data conducive to a search for clients who are waiting for service voluntarily and openly, wherein the demand content of the client information comprises demand items, required specialty and grade, an intended duration of service, supplier eligibility criteria, intended prices, data conducive to a search for eligible suppliers, and data required for the client's waiting for service voluntarily and openly.

4. The system of claim 3, **characterized in that** the master module (11) further connects with a receipt and payment system (51), calculates a total fee of the real-time audiovisual service according to charge rates set forth in the service content of the specific remote supplier, and informs the receipt and payment system (51) of the calculated total fee, wherein the receipt and payment system (51) receives a payment made by the remote client according to the calculated total fee, deducts a service fee from the payment amount, and pays the remainder to the specific remote supplier.

5. The system of claim 3, **characterized in that** the service content of the supplier information further comprises an initial duration of free service.

6. The system of claim 1, **characterized in that** the client information further comprises a biometric identification data for identifying a client.

7. The system of claim 1 or 6, wherein the biometric identification data is a human facial image, a voice sample, or both the human facial and the voice sample.

8. The system of claim 7, wherein one of the client module (31) and the supplier module (21) captures the human facial image, the voice sample, or both the human facial and the voice sample of a login-authenticated person through a video module, a conversation module, or both the video module and the conversation module wherein the master module (11) compares the human facial image, the voice sample, or both the human facial and the voice sample of the remote client and the remote supplier with the human facial image, the voice sample, or both the human facial and the voice sample stored in the user database (12) to generate a verification result and sends the verification result to one of the client module (31) and the supplier module (21).

9. The system of claim 1, **characterized in that**, upon completion of the real-time audiovisual service, the remote client and the remote supplier give each other a transaction rating through a rating mechanism, wherein the transaction ratings are sent through the client module (31) and the supplier module (21) to the user database (12) of the master module (11), stored therein, and statistically computed by the master module (11) to form at least a single transaction rating, an accumulative rating of all transactions and a weighted average rating calculated in accordance with a charged service duration which are automatically included in the supplier information and the client information.
